# EUROPÄISCHE PATENTSCHRIFT

(11) **EP 2 419 630 B1**
(45) Veröffentlichungstag und Bekanntmachung des Hinweises auf die Patenterteilung: **19.11.2014**
(21) Anmeldenummer: 10711174.2
(22) Anmeldetag: 05.03.2010
(51) Int. Cl.: F03D 7/02, F03D 9/00

(54) **WINDENERGIEANLAGE UND ANTRIEBSEINRICHTUNG ZUR VERSTELLUNG EINES ROTORBLATTS**
WIND ENERGY PLANT AND DRIVE DEVICE FOR ADJUSTING A ROTOR BLADE
ÉOLIENNE ET DISPOSITIF D'ENTRAÎNEMENT POUR LE RÉGLAGE D'UNE PALE DE ROTOR

(30) Priorität: 14.04.2009 DE 102009017028
(43) Veröffentlichungstag der Anmeldung: 22.02.2012
(73) Patentinhaber: Siemens Aktiengesellschaft, 80333 München (DE)
(72) Erfinder: KREIDLER, Volker, 72379 Hechingen (DE); STEINIGEWEG, Rolf-Jürgen, 91074 Herzogenaurach (DE)
(86) Internationale Anmeldenummer: PCT/EP2010/052810
(87) Internationale Veröffentlichungsnummer: WO 2010/118918

(56) Entgegenhaltungen:
- WO-A1-01/06623
- WO-A2-2007/098759
- US-A1- 2004 041 409
- US-A1- 2004 207 208
- US-B1- 7 218 012

## Beschreibung

Windenergieanlagen dienen einer Umwandlung kinetischer Energie von Wind mittels eines Rotors in elektrische Energie, um diese beispielsweise in ein elektrisches Energieübertragungsnetz einzuspeisen. Bewegungsenergie einer Windströmung wirkt auf Rotorblätter ein, die an einer Rotornabe montiert sind und bei einer Windströmung in eine Drehbewegung versetzt werden. Die Drehbewegung wird direkt oder mittels eines Getriebes auf einen Generator übertragen, der die Bewegungsenergie in elektrische Energie umwandelt. Ein den Generator umfassender Antriebsstrang ist bei konventionellen Windenergieanlagen in einer auf einem Turm montierten Gondel angeordnet.

Rotorblätter von Windenergieanlagen weisen ein aerodynamisches Profil auf, das einen Druckunterschied hervorruft, der durch einen Strömungsgeschwindigkeitsunterschied zwischen Saug- und Druckseite eines Rotorblatts bedingt ist. Aus diesem Druckunterschied resultiert ein auf den Rotor wirkendes Drehmoment, das dessen Geschwindigkeit beeinflusst.

Windenergieanlagen weisen vorwiegend eine horizontale Rotationsachse auf. Bei derartigen Windenergieanlagen erfolgt üblicherweise eine Windrichtungsnachführung der Gondel mittels Stellmotoren. Dabei wird die über ein Azimutlager mit dem Turm verbundene Gondel um dessen Achse gedreht.

Rotoren mit 3 Rotorblättern haben sich gegenüber Ein-, Zwei- oder Vierblatt-Rotoren durchgesetzt, da Dreiblatt-Rotoren schwingungstechnisch einfacher beherrschbar sind. Bei Rotoren mit einer geraden Anzahl von Rotorblättern werden auf ein Rotorblatt infolge von Windschatteneffekten einwirkende Kippkräfte durch ein um 180° versetztes gegenüberliegendes Rotorblatt verstärkt, woraus sich erhöhte Anforderungen an Mechanik und Material ergeben. Rotoren mit 5 oder 7 Rotorblättern führen zu aerodynamischen Zuständen, die mathematisch relativ kompliziert beschreibbar sind, da sich Luftströmungen an den Rotorblättern gegenseitig beeinflussen. Zudem ermöglichen derartige Rotoren keine Ertragssteigerungen, die in einem wirtschaftlichen Verhältnis zum Mehraufwand gegenüber Rotoren mit 3 Rotorblättern stehen.

Häufig weisen Windenergieanlagen Pitch-Antriebssysteme zur Rotorblattverstellung auf. Durch eine Anstellwinkelverstellung von Rotorblättern werden die Strömungsgeschwindigkeitsunterschiede zwischen Saug- und Druckseiten der Rotorblätter verändert. Dies beeinflusst wiederum auf den Rotor wirkendes Drehmoment und die Rotorgeschwindigkeit.

In herkömmlichen Windenergieanlagen erfolgt eine Rotorblattverstellung über einen hydraulisch betätigten Zylinder oder über einen Elektro- bzw. Getriebemotor. Bei einer motorbetriebenen Verstellung kämmt ein Abtriebsritzel mit einem Zahnkranz, der ein Rotorblatt umgibt und mit diesem im Bereich eines Lagerrings verbunden ist.

Aus der WO 2005/019642 A1 ist ein Pitch-Antriebssystem bekannt, das einen getriebelosen Direktantrieb aufweist, dessen Rotor und Stator konzentrisch ineinander in einer Ebene angeordnet sind. Dieses Pitch-Antriebssystem weist jedoch den Nachteil auf, dass Rotor und Stator hinsichtlich ihrer Abmessungen an das jeweilige Rotorblatt angepasst sein müssen. Dies schränkt eine Verwendbarkeit des aus der WO 2005/019642 A1 bekannten Pitch-Antriebssystems für unterschiedliche Rotorblattgrößen erheblich ein.

Aus der US 7 218 021 B1 ist eine Windenergieanlage mit einem Rotor bekannt, wobei der Rotor eine an einer Gondel gelagerte Rotornabe und eine Mehrzahl von Rotorblättern umfasst und mit dem Rotor ein elektrischer Generator verbunden ist. Die Rotorblätter sind jeweils mit einer elektrischen Antriebseinrichtung zur Verstellung eines Rotorblatts versehen.

Aus der WO 01/06623 A1 ist eine Windenergieanlage mit einem Rotor bekannt, wobei der Rotor eine an einer Gondel gelagerte Rotornabe und eine Mehrzahl von Rotorblättern umfasst und mit dem Rotor ein elektrischer Generator verbunden ist. In der WO 01/06623 A1 ist beiläufig erwähnt, dass die Rotorblätter verstellbar sein können. Der Generator ist vom Rotor direkt angetrieben.

Aus der US 2004/0 041 409 A1 ist eine Windenergieanlage mit einem Rotor bekannt, wobei der Rotor eine an einer Gondel gelagerte Rotornabe und eine Mehrzahl von Rotorblättern umfasst und mit dem Rotor ein elektrischer Generator verbunden ist.

Aus der WO 2007/098 759 A2 ist eine Windenergieanlage mit einem an einer Gondel gelagerten Rotor bekannt, wobei mit dem Rotor ein Generator verbunden ist. Der Rotor umfasst eine Rotornabe und eine Mehrzahl von Rotorblättern, die mittels einer jeweiligen Antriebseinrichtung verstellbar sind. Die jeweilige Antriebseinrichtung ist konzentrisch zu einem Rotorblattlager des jeweiligen Rotorblattes an der Rotornabe angeordnet und umfasst einen permanent erregten Synchronmotor. Der Stator des jeweiligen Synchronmotors umfasst einen an der Rotornabe montierten jeweiligen Spulenkörper. Der Rotor des jeweiligen Synchronmotors ist zur Bildung eines sich radial erstreckenden Luftspaltes in einem radialen Abstand zum Stator des jeweiligen Synchronmotors angeordnet. Der Rotor wirkt auf ein Sonnenrad eines Planetengetriebes. Er weist eine Permanentmagnetanordnung auf. Der Synchronmotor ist in der WO 2007/098 759 A2 als elektrischer Direktantrieb bezeichnet.

Der vorliegenden Erfindung liegt die Aufgabe zugrunde, eine Windenergieanlage zu schaffen, deren Pitch-Antriebssystem für unterschiedliche Rotorblattgrößen verwendbar ist und eine schnelle, genaue Rotorblattverstellung ermöglicht, sowie hierfür geeignete Systemkomponenten anzugeben.

Diese Aufgabe wird erfindungsgemäß durch einen Rotor mit den in Anspruch 1 angegebenen Merkmalen und durch eine Windenergieanlage mit den in Anspruch 5 angegebenen Merkmalen gelöst. Vorteilhafte Weiterbildungen der vorliegenden Erfindung sind in den abhängigen Ansprüchen angegeben.

Die erfindungsgemäße Windenergieanlage weist einen Rotor auf, der eine an einer Gondel gelagerte Rotornabe und eine Mehrzahl von Rotorblättern umfasst. Mit dem Rotor ist ein elektrischer Generator verbunden. Darüber hinaus ist jeweils eine als Direktantrieb ausgestaltete elektrische Antriebseinrichtung zur Verstellung eines Rotorblatts vorgesehen, die konzentrisch zu einem Rotorblattlager an der Rotornabe angeordnet ist und einen permanent erregten Synchronmotor umfasst. Ein Stator des Synchronmotors umfasst einen an der Rotornabe montierten Spulenkörper. Ein Rotor des Synchronmotors ist zur Bildung eines sich axial erstreckenden Luftspalts in einem axialen Abstand zum Stator angeordnet. Außerdem weist der Rotor auf einer Trägerplatte, die mit einem Rotorblattschaft verbunden ist, eine Permanentmagnetanordnung auf.

Durch Verwendung eines Direktantriebssystem mit einem permanent erregten Synchronmotor und durch Einsparung wartungsbedürftiger mechanischer Komponenten wird erfindungsgemäß eine verschleißfreie, genauere und dynamischere Einzelblattverstellung im Vergleich zu konventionellen Pitch-Antriebssystemen erzielt. Eine Ausführung des Synchronmotors in einer Schichtbauweise ermöglicht dessen Verwendung für eine Vielzahl von Rotorblattgrößen sowie eine einfache Montage, da Rotor und Stator separat hantiert werden können. Eine weitere Vereinfachung der Montage kann erzielt werden, wenn sowohl Rotor als auch Stator jeweils in kreissegmentförmige Baugruppen aufgeteilt werden, die zusammen den Rotor bzw. Stator bilden.

Entsprechend einer bevorzugten Weiterbildung der vorliegenden Erfindung sind Rotor und Stator des Synchronmotors in separaten Ebenen angeordnet und umgeben das Rotorblattlager. Dies ermöglicht eine besonders platzsparende Anordnung eines Pitch-Antriebssystems. Darüber hinaus kann der Synchronmotor beispielsweise als Segmentmotor ausgebildet sein, und die Permanentmagnetanordnung kann segmentweise auf der Trägerplatte angeordnete Permanentmagnete umfassen, die mit segmentweise angeordneten Spulen des Spulenkörpers zusammenwirken. Dies ermöglicht eine kostengünstige Herstellung eines Pitch-Antriebssystems durch Rückgriff auf eine Vielzahl gleichartiger Bauteile.

Zur Aufrechterhaltung seiner Verstellung kann ein Rotorblatt entsprechend einer weiteren vorteilhaften Ausgestaltung der vorliegenden Erfindung mittels eines Keilmechanismus arretierbar sein, der einen mittels eines ersten und zweiten Keilkörpers betätigbaren Reibekörper umfasst. Der erste und der zweite Keilkörper weisen dabei jeweils in Wechselwirkung miteinander stehende Anlageflächen auf. Außerdem ist ein mit dem Rotorblatt verbundenes und mit diesem um seine Achse drehbares Arretierelement vorgesehen. Der Reibekörper übt bei einer Relativbewegung zwischen dem ersten und zweiten Keilkörper eine Anpresskraft auf das Arretierelement aus. Mittels des Keilmechanismus kann ein Rotorblatt einfach und sicher in seiner Verstellung arretiert werden. Alternativ zu einem Keilmechanismus kann ein Rotorblatt mittels eines konischen, elektromagnetisch entriegelbaren Indexbolzens in einer sicheren 90°-Stellung fixiert werden.

Die vorliegende Erfindung wird nachfolgend an einem Ausführungsbeispiel anhand der Zeichnung näher erläutert. Es zeigt
- FIG 1: eine schematische Darstellung einer Windenergieanlage mit einem erfindungsgemäßen Pitch-Antriebssystem,
- FIG 2: eine Detaildarstellung des Pitch-Antriebssystems der Windenergieanlage gemäß FIG 1,
- FIG 3: eine Detaildarstellung eines Rotors des Pitch-Antriebssystems gemäß FIG 2,
- FIG 4: eine Detaildarstellung eines Stators des Pitch-Antriebssystems gemäß FIG 2,
- FIG 5: Segmente eines Rotors und eines Stators gemäß FIG 3 und 4 in perspektivischer Darstellung,
- FIG 6: eine Detaildarstellung einer Arretierungsvorrichtung für das Pitch-Antriebssystems gemäß FIG 2.

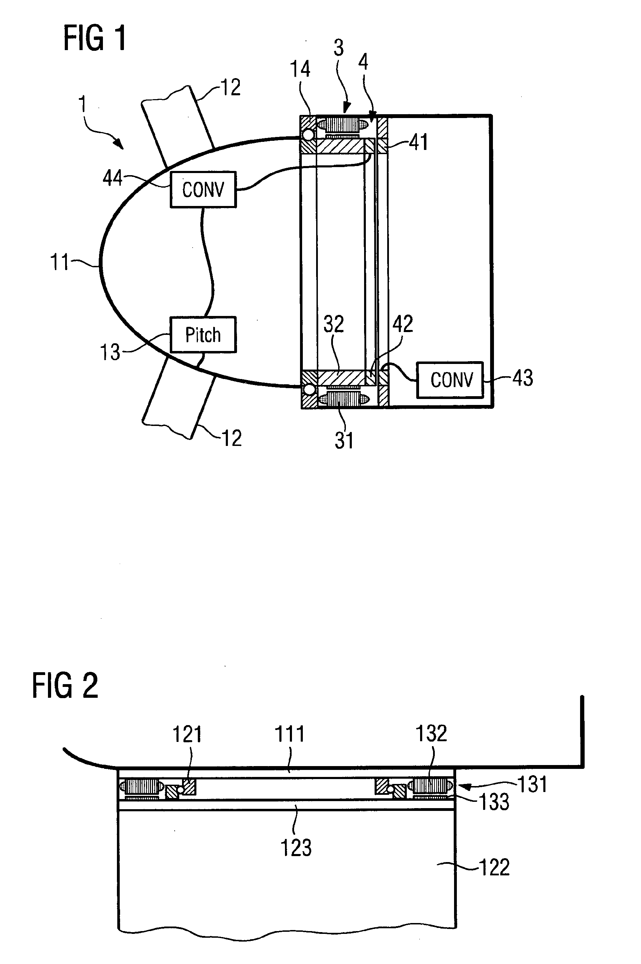

Die in FIG 1 dargestellte Windenergieanlage weist einen Rotor 1 auf, der eine an einer Gondel 2 gelagerte Rotornabe 11 und mehrere Rotorblätter 12 umfasst, die jeweils mittels eines separaten Pitch-Systems 13 verstellbar sind. Ein Läufer 32 eines elektrischen Generators 3 ist mit der Rotornabe 11 drehbar und in diese integriert. Ein Rotorlager 14 schließt sich an einen Stator 31 des Generators 3 an.

Darüber hinaus weist die in FIG 1 dargestellte Windenergieanlage eine Energieübertragungseinrichtung 4 auf, die einen konzentrisch zum Rotorlager 14 angeordneten Drehübertrager zur Energieversorgung des in der Rotornabe 11 angeordneten Pitch-Systems 13 umfasst. Ein ringförmiges Primärteil 41 des Drehübertragers ist über das Rotorlager 14 mit der Gondel 2 verbunden. Das Primärteil 41 und das Rotorlager 14 können zu einer integrierten Systemkomponente zusammengefasst sein. Außerdem umfasst der Drehübertrager ein mit der Rotornabe 11 verbundenes und mit dieser drehbares ringförmiges Sekundärteil 42. Das Sekundärteil 42 ist benachbart zu einer Läuferwicklung des Generators 3 und konzentrisch zu dieser angeordnet.

Zur Erzeugung einer hochfrequenten Erregerspannung aus einer niederfrequenten Versorgungsspannung ist ein erster Frequenzumrichter 43 vorgesehen, der zwischen dem Primärteil 41 und einer in FIG 1 nicht explizit dargestellten Versorgungsspannungsquelle angeschlossen ist. Die Energieübertragungseinrichtung 4 umfasst ferner einen zweiten Frequenzumrichter 44 zur Erzeugung einer niederfrequenten Verbraucherspannung aus einer hochfrequenten transformierten Erregerspannung. Der zweite Frequenzumrichter 44 ist zwischen dem Sekundärteil 42 und dem Pitch-System 13 angeschlossen.

Anstelle eines zweiten Frequenzumrichters kann ein Gleichrichter zur Erzeugung einer Gleichspannung aus einer hochfrequenten transformierten Erregerspannung vorgesehen sein, der zwischen dem Sekundärteil 42 und den elektrischen Verbrauchern in der Rotornabe 11 angeschlossen ist. Darüber hinaus kann der Drehübertrager Bestandteil eines den Rotor 1 mit dem Generator 3 verbindenden Getriebes sein und an einem rotorseitigen Getriebewellenende eine hochfrequente Wechselspannung über eine elektrische Steckverbindung bereitstellen.

Das Primärteil 41 und das Sekundärteil 42 des Drehübertragers der in FIG 1 dargestellten Windenergieanlage sind axial beabstandet in separaten Ebenen angeordnet und weisen im wesentlichen denselben Durchmesser auf. Ein Luftspalt des Drehübertragers, in dem durch die Erregerspannung ein hochfrequentes elektromagnetisches Feld erzeugt wird, erstreckt sich axial zwischen Primärteil 41 und Sekundärteil 42. Grundsätzlich könnten Primärteil 41 und Sekundärteil 42 auch konzentrisch ineinander in einer gemeinsamen Ebene angeordnet sein, und der Luftspalt des Drehübertragers könnte sich radial zwischen Primärteil 41 und Sekundärteil 42 erstrecken.

Über den Drehübertrager können auch Steuerungs- und Statussignale vom und zum Pitch-System 13 übertragen werden. Alternativ dazu können die Steuerungs- und Statussignale auch über eine WLAN-Verbindung oder eine geeignete andere Funkverbindung übertragen werden.

Entsprechend der Detaildarstellung des als elektrischer Direktantrieb ausgestalteten Pitch-Systems 13 in FIG 2 ist ein permanent erregter Synchronmotor 131 vorgesehen, der konzentrisch zu einem Rotorblattlager 121 an der Rotornabe 11 angeordnet ist. Ein Stator 132 des Synchronmotors 131 umfasst einen an einem Ring 111 der Rotornabe 11 montierbaren Spulenkörper. Ein Rotor 133 des Synchronmotors 131 ist zur Bildung eines sich axial erstreckenden Luftspalts in einem axialen Abstand zum Stator 132 angeordnet und weist auf einem Trägerring 123, der mit einem Rotorblattschaft 122 verbunden ist, eine Permanentmagnetanordnung auf. Rotor 133 und Stator 132 des Synchronmotors 131 sind in separaten Ebenen angeordnet und umgeben das Rotorblattlager 121.

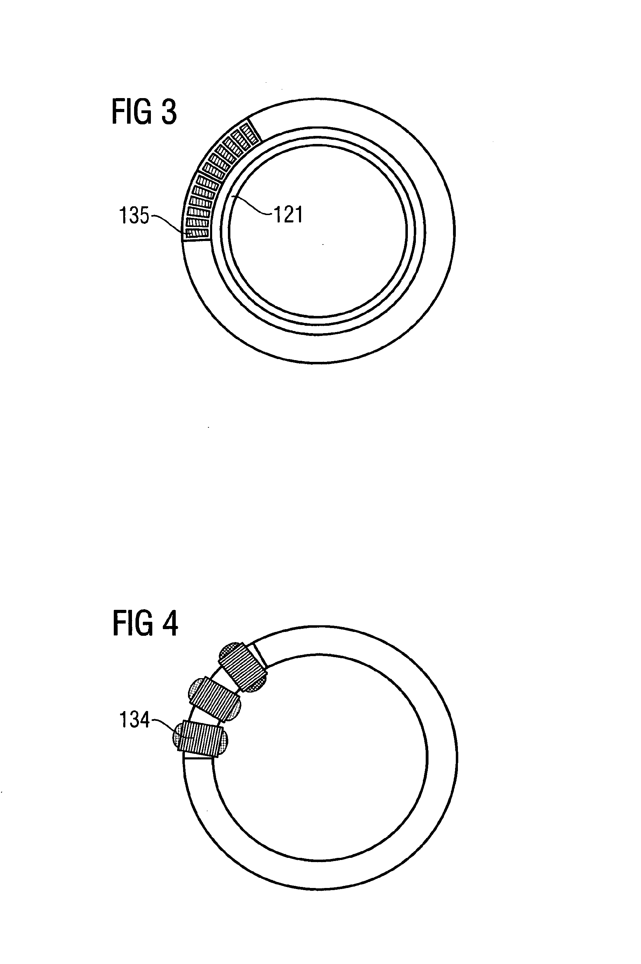

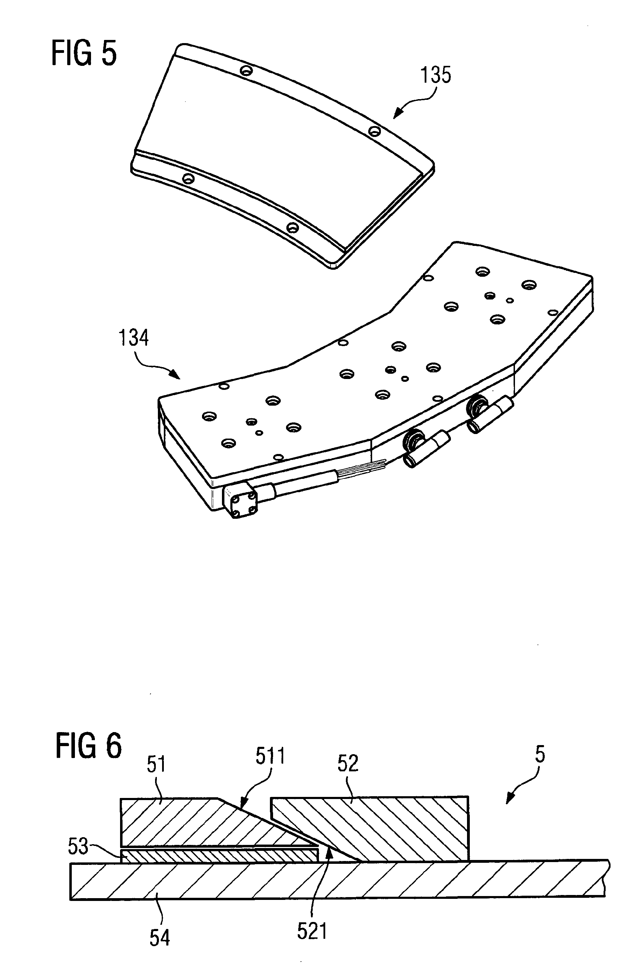

Anhand der Detaildarstellungen in FIG 3 und 4 ist erkennbar, dass der Synchronmotor 131 als Segmentmotor ausgebildet ist (siehe auch FIG 5). Die Permanentmagnetanordnung umfasst segmentweise auf dem Trägerring 123 um das Rotorblattlager 121 angeordnete Permanentmagnete 135, die mit segmentweise angeordneten Spulen 134 des Spulenkörpers zusammenwirken.

Zur Fixierung einer Verstellung eines Rotorblatts ist die in FIG 6 dargestellte Arretierungsvorrichtung 5 vorgesehen. Die Arretierungsvorrichtung 5 umfasst einen mittels eines ersten Keilkörpers 51 und eines zweiten Keilkörpers 52 betätigbaren Reibekörper 53. Der erste Keilkörper 51 und der zweite Keilkörper 52 weisen jeweils in Wechselwirkung miteinander stehende Anlageflächen 511, 521 auf. Außerdem umfasst die Arretierungsvorrichtung 5 ein mit dem Rotorblatt 12 verbundenes und mit diesem um seine Achse drehbares Arretierelement 54, das beispielsweise an den Trägerring 123 angeformt oder in diesen integriert sein kann. Der Reibekörper 53 übt eine Anpresskraft auf das Arretierelement 54 aus, wenn die beiden Keilkörper aufeinander zu bewegt werden bzw. wenn ein Keilkörper in Richtung des anderen Keilkörpers verschoben und der andere Keilkörper fixiert wird.

Die Anwendung der vorliegenden Erfindung ist nicht auf obige Ausführungsbeispiele beschränkt.

## Patentansprüche

1. Rotor einer Windenergieanlage,
- wobei der Rotor eine Rotornabe (11) und eine Mehrzahl von Rotorblättern (12) umfasst,
- wobei die Rotorblätter (12) mittels einer jeweiligen Antriebseinrichtung (13) verstellbar sind,
- wobei die jeweilige Antriebseinrichtung (13) konzentrisch zu einem Rotorblattlager (121) des jeweiligen Rotorblattes (12) an der Rotornabe (11) angeordnet ist und einen permanent erregten Synchronmotor (131) umfasst,
- wobei der Stator (132) des jeweiligen Synchronmotors (131) einen an der Rotornabe (11) montierten jeweiligen Spulenkörper umfasst,
- wobei der Rotor (133) des jeweiligen Synchronmotors (131) zur Bildung eines sich axial erstreckenden Luftspalts in einem axialen Abstand zum Stator (132) des jeweiligen Synchronmotors (131) angeordnet ist,
- wobei der Rotor (133) des jeweiligen Synchronmotors (131) auf einer jeweiligen Trägerplatte (123), die mit einem jeweiligen Rotorblattschaft (122) verbunden ist, eine jeweilige Permanentmagnetanordnung aufweist,
- wobei die jeweilige Antriebseinrichtung (13) als elektrischer Direktantrieb ausgestaltet ist.

2. Rotor nach Anspruch 1, bei welchem
der Rotor (133) und der Stator (132) des jeweiligen Synchronmotors (131) in separaten Ebenen angeordnet sind und das jeweilige Rotorblattlager (121) umgeben.

3. Rotor nach einem Anspruch 1 oder 2, bei welchem
- der jeweilige Synchronmotor (131) als Segmentmotor ausgebildet ist und
- die jeweilige Permanentmagnetanordnung segmentweise auf der jeweiligen Trägerplatte (123) angeordnete Permanentmagnete (135) umfasst, die mit segmentweise angeordneten jeweiligen Spulen (134) des jeweiligen Spulenkörpers zusammenwirken.

4. Rotor nach Anspruch 1, 2 oder 3, bei welchem
- ein Rotorblatt (12) zur Aufrechterhaltung seiner Verstellung mittels eines Keilmechanismus arretierbar ist, der einen mittels eines ersten und zweiten Keilkörpers (51, 52) betätigbaren Reibekörper (53) umfasst,
- der erste und der zweite Keilkörper (51, 52) jeweils in Wechselwirkung miteinander stehende Anlageflächen (511, 521) aufweisen,
- ein mit dem Rotorblatt (12) verbundenes und mit diesem um seine Achse drehbares Arretierelement vorgesehen ist, und
- der Reibekörper (53) bei einer Relativbewegung zwischen dem ersten und zweiten Keilkörper (51, 52) eine Anpresskraft auf das Arretierelement ausübt.

5. Windenergieanlage mit einem an einer Gondel gelagerten Rotor (1) nach nach einem der Ansprüche 1 bis 4 und einem mit dem Rotor (1) verbundenen elektrischen Generator (3).

6. Windenergieanlage nach Anspruch 5, bei welcher
- ein konzentrisch zu einem Rotorlager (14) angeordneter Drehübertrager zur Energieversorgung der Antriebseinrichtungen (13) vorgesehen ist,
- der Drehübertrager ein mit der Gondel verbundenes Primärteil (41) und ein in der Rotornabe (11) angeordnetes und mit dieser drehbares Sekundärteil (42) umfasst,
- ein erster Frequenzumrichter (43) zur Erzeugung einer hochfrequenten Erregerspannung aus einer niederfrequenten Versorgungsspannung vorgesehen ist, der zwischen dem Primärteil (41) und einer Versorgungsspannungsquelle angeschlossen ist, und
- ein zweiter Frequenzumrichter (44) zur Erzeugung einer niederfrequenten Verbraucherspannung aus einer hochfrequenten transformierten Erregerspannung vorgesehen ist, der zwischen dem Sekundärteil (42) und den elektrischen Verbrauchern in der Rotornabe (11) angeschlossen ist.

7. Windenergieanlage nach Anspruch 6, bei welcher sich eine Läuferwicklung an das Sekundärteil (42) des Drehübertragers anschließt.

8. Windenergieanlage nach Anspruch 6 oder 7, bei welcher das Primärteil (41) und das Sekundärteil (42) konzentrisch ineinander in einer gemeinsamen Ebene angeordnet sind, und sich ein Luftspalt des Drehübertragers radial zwischen dem Primärteil (41) und dem Sekundärteil (42) erstreckt.

9. Windenergieanlage nach Anspruch 6 oder 7, bei welcher das Primärteil (41) und das Sekundärteil (42) axial versetzt in separaten Ebenen angeordnet sind und sich ein Luftspalt des Drehübertragers axial zwischen dem Primärteil (41) und dem Sekundärteil (42) erstreckt.

10. Windenergieanlage nach einem der Ansprüche 6 bis 9, bei welcher
der Drehübertrager in das Rotorlager (14) integriert ist.

11. Windenergieanlage nach einem der Ansprüche 4 bis 10, bei welcher
ein Läufer (32) des Generators (3) mit der Rotornabe (11) drehbar ist.

## Claims

1. Rotor of a wind energy plant,
- wherein the rotor comprises a rotor hub (11) and a plurality of rotor blades (12),
- wherein the rotor blades (12) are adjustable by means of a respective drive device (13),
- wherein the respective drive device (13) is arranged concentrically with respect to a rotor blade bearing (121) of the respective rotor blade (12) on the rotor hub (11) and comprises a permanent magnet synchronous motor (131),
- wherein the stator (132) of the respective synchronous motor (131) comprises a respective coil former mounted on the rotor hub (11),
- wherein the rotor (133) of the respective synchronous motor (131) is arranged at an axial distance from the stator (132) of the respective synchronous motor (131) so as to form an axially extending air gap,
- wherein the rotor (133) of the respective synchronous motor (131) has a respective permanent magnet arrangement on a respective carrier plate (123), which is connected to a respective rotor blade shaft (122),
- wherein the respective drive device (13) is in the form of an electrical direct drive.

2. Rotor according to Claim 1, in which
the rotor (133) and the stator (132) of the respective synchronous motor (131) are arranged in separate planes and surround the respective rotor blade bearing (121).

3. Rotor according to either of Claims 1 and 2, in which
- the respective synchronous motor (131) is in the form of a segment motor, and
- the respective permanent magnet arrangement comprises permanent magnets (135), which are arranged in segments on the respective carrier plate (123) and interact with respective coils (134) of the respective coil former arranged in segments.

4. Rotor according to Claim 1, 2 or 3, in which
- a rotor blade (12) can be locked so as to maintain its adjustment by means of a wedge mechanism, which comprises a friction body (53) which can be actuated by means of a first and second wedge body (51, 52),
- the first and the second wedge body (51, 52) each have bearing faces (511, 521) which interact with one another,
- a locking element, which is connected to the rotor blade (12) and is capable of rotating therewith about the axis of said rotor blade is provided, and
- the friction body (53) exerts a contact-pressure force on the locking element in the event of a relative movement between the first and second wedge bodies (51, 52).

5. Wind energy plant with a rotor (1) mounted on a pod according to one of Claims 1 to 4 and an electrical generator (3), which is connected to the rotor (1).

6. Wind energy plant according to Claim 5, in which
- a rotary transformer, which is arranged concentrically with respect to a rotor bearing (14), is provided for supplying energy to the drive device (13),
- the rotary transformer comprises a primary part (41), which is connected to the pod, and a secondary part (42), which is arranged in the rotor hub (11) and is capable of rotating therewith,
- a first frequency converter (43) is provided for generating a radiofrequency field voltage from a low-frequency supply voltage, said first frequency converter being connected between the primary part (41) and a supply voltage source, and
- a second frequency converter (44) is provided for generating a low-frequency load voltage from a radiofrequency transformed field voltage, said second frequency converter being connected between the secondary part (42) and the electrical loads in the rotor hub (11).

7. Wind energy plant according to Claim 6, in which a rotor winding adjoins the secondary part (42) of the rotary transformer.

8. Wind energy plant according to Claim 6 or 7, in which the primary part (41) and the secondary part (42) are arranged concentrically one inside the other in a common plane, and an air gap in the rotary transformer extends radially between the primary part (41) and the secondary part (42).

9. Wind energy plant according to Claim 6 or 7, in which the primary part (41) and the secondary part (42) are arranged so as to be axially offset in separate planes, and an air gap in the rotary transformer extends axially between the primary part (41) and the secondary part (42).

10. Wind energy plant according to one of Claims 6 to 9, in which
the rotary transformer is integrated in the rotor bearing (14).

11. Wind energy plant according one of Claims 4 to 10, in which
a rotor (32) of the generator (3) is capable of rotating with the rotor hub (11).

## Revendications

1. Rotor d'une éolienne,
- le rotor comprenant un moyeu de rotor (11) et une pluralité de pales de rotor (12),
- les pales de rotor (12) étant réglables au moyen d'un dispositif d'entraînement respectif (13),
- le dispositif d'entraînement respectif (13) étant disposé sur le moyeu de rotor (11), concentriquement par rapport à un palier de pale de rotor (121) de la pale de rotor respective (12) et comprenant un moteur synchrone (131) suscité en permanence.
- le stator (132) du moteur synchrone respectif (131) comprenant un corps de bobine respectif monté sur le moyeu de rotor (11),
- le rotor (133) du moteur synchrone respectif (131) étant disposé avec un écart axial par rapport au stator (132) du moteur synchrone respectif (131) pour former un espace d'air s'étendant axialement,
- le rotor (133) du moteur synchrone respectif (131) présentant un agencement respectif d'aimants permanents sur une plaque de support respective (123) qui est reliée à une tige respective (122) de pale de rotor,
- le dispositif d'entraînement respectif (13) étant réalisé comme entraînement électrique direct.

2. Rotor selon la revendication 1, dans lequel
le rotor (133) et le stator (132) du moteur synchrone respectif (131) sont disposés dans des plans séparés et entourent le palier respectif (121) de pale de rotor.

3. Rotor selon l'une quelconque des revendications 1 ou 2, dans lequel
- le moteur synchrone respectif (131) est réalisé comme moteur à segment et
- l'agencement respectif à aimants permanents comprend des aimants permanents (135) disposés par segments sur la plaque de support respective (123), lesquels coopèrent avec des bobines respectives (134) du corps de bobine respectif, disposées par segments.

4. Rotor selon l'une quelconque des revendications 1, 2 ou 3, dans lequel
- une pale de rotor (12) est blocable au moyen d'un mécanisme à clavette pour maintenir son réglage, lequel mécanisme à clavette comprend un corps de frottement (53) actionnable au moyen d'un premier et d'un deuxième corps de clavette (51, 52),
- le premier et le deuxième corps de clavette (51, 52) présentent des surfaces d'appui (511, 521) agissant alternativement l'une avec l'autre,
- un élément de blocage relié à la pale de rotor (12) et rotatif avec celle-ci autour de son axe est ménagé, et
- le corps de frottement (53) exerce une force de pression sur l'élément de blocage lors d'un mouvement relatif entre le premier et le deuxième corps de clavette (51, 52).

5. Éolienne munie d'un rotor (1) logé sur un fuseau, selon l'une quelconque des revendications 1 à 4, et munie d'un générateur électrique (3) relié au rotor (1).

6. Éolienne selon la revendication 5, dans laquelle
- un transmetteur rotatif disposé concentriquement par rapport à un palier de rotor (14) est ménagé pour l'alimentation en énergie des dispositifs d'entraînement (13),
- le transmetteur rotatif comprend une partie primaire (41) reliée au fuseau et une partie secondaire (42) se trouvant dans le moyeu de rotor (11) et rotative avec celle-ci,
- un premier convertisseur de fréquence (43) est ménagé pour générer une tension d'excitation à haute fréquence à partir d'une tension d'alimentation à basse fréquence, lequel est raccordé entre la partie primaire (41) et une source de tension d'alimentation, et
- un deuxième convertisseur de fréquence (44) est ménagé pour générer une tension d'appareil à basse fréquence à partir d'une tension d'excitation transformée à haute fréquence, lequel est raccordé entre la partie secondaire (42) et les appareils électriques dans le moyeu de rotor (11).

7. Éolienne selon la revendication 6, dans laquelle un enroulement rotorique se raccorde à la partie secondaire (42) du transmetteur rotatif.

8. Éolienne selon la revendication 6 ou 7, dans laquelle la partie primaire (41) et la partie secondaire (42) sont disposées concentriquement l'une dans l'autre dans un plan commun, et dans laquelle un espace d'air du transmetteur rotatif s'étend radialement entre la partie primaire (41) et la partie secondaire (42).

9. Éolienne selon la revendication 6 ou 7, dans laquelle
la partie primaire (41) et la partie secondaire (42) sont disposées de manière axialement décalée dans des plans séparés et dans laquelle un espace d'air du transmetteur rotatif s'étend axialement entre la partie primaire (41) et la partie secondaire (42).

10. Éolienne selon l'une quelconque des revendications 6 à 9, dans laquelle le transmetteur rotatif est intégré dans le palier de rotor (14).

11. Éolienne selon l'une quelconque des revendications 4 à 10, dans laquelle un induit (32) du générateur (3) est rotatif avec le moyeu de rotor (11).
